# FASCICULE DE BREVET EUROPEEN

(11) **EP 3 071 811 B1**
(45) Date de publication et mention de la délivrance du brevet: **23.08.2017**
(21) Numéro de dépôt: 14780538.6
(22) Date de dépôt: 12.09.2014
(51) Int. Cl.: F02B 37/18

(54) **TURBOCOMPRESSEUR A CLAPET DE DÉCHARGE SILENCIEUX**
TURBOLADER MIT GERÄUSCHARMEN AUSLASSVENTIL
TURBOCHARGER WITH A SILENT DISCHARGE VALVE

(30) Priorité: 21.11.2013 FR 1361485
(43) Date de publication de la demande: 28.09.2016
(73) Titulaire: PEUGEOT CITROËN AUTOMOBILES SA, 78140 Vélizy Villacoublay (FR)
(72) Inventeur: DESSARTHE, Stanislas, F-62300 Lens (FR)
(86) Numéro de dépôt international: PCT/FR2014/052262
(87) Numéro de publication internationale: WO 2015/075331

(56) Documents cités:
- DE-A1-102007 018 618
- DE-A1-102011 007 417
- DE-A1-102011 079 573

## Description

L'invention concerne les moteurs à combustion de véhicule automobile comportant un turbocompresseur, et plus particulièrement l'acoustique d'un tel turbocompresseur.

Elle concerne notamment les turbocompresseurs, du type à géométrie fixe pour moteur essence mais concerne également les turbocompresseurs à géométrie variable lorsqu'ils sont sujets à des émissions de bruits.

Les turbocompresseurs, notamment à géométrie fixe, disposent d'une soupape de décharge ou soupape « wastegate » selon la terminologie anglo-saxonne. La soupape de décharge ou wastegate est un régulateur de la pression de suralimentation. Le clapet de décharge est actionné par un actionneur (encore parfois désigné actuateur) lequel est constitué d'un ressort et d'une membrane. En fonction des applications, l'actionneur peut être commandé en pression ou en dépression via respectivement la pression de suralimentation généralement régulée par une électrovanne ou la dépression issue de la pompe à vide régulée par une électrovanne. L'actionneur pneumatique est sur certaines applications remplacées par un actionneur électrique. L'actionneur comporte une tige reliée au levier externe de commande du clapet de décharge.

Du fait que la cinématique de commande du clapet de décharge est soumise à de forts écarts de température, les liaisons pivots qui y sont présentes nécessitent des jeux relativement importants, de l'ordre de 2 à 3/10^{ème} de millimètre. Ces jeux sont propices à des phénomènes de chocs métal-métal générateurs de bruits. C'est le cas particulièrement de la liaison pivot entre l'axe de commande du levier externe de la soupape de décharge et la tige de commande de l'actionneur de la soupape de décharge. Or sous l'effet de la pulsation de pression répétitive des gaz d'échappement, la soupape de décharge est excitée ce qui provoque un mouvement pendulaire de l'axe situé en extrémité du levier externe lequel axe est engagé dans un trou d'axe de la tige de commande de l'actionneur. Ce mouvement engendre des chocs entre l'axe et le trou d'axe dans lequel il est introduit. Il apparait donc un bruit de chocs cadencés ayant la même fréquence que les émissions des gaz d'échappement. Ce bruit est un bruit métallique très audible de l'extérieur et de l'intérieur du véhicule.

Afin de limiter l'occurrence de ces bruits, des stratégies de calibration du moteur sont régulièrement mises en place mais celles-ci augmentent généralement la consommation de carburant.

On a également proposé dans le document DE202007019447 U1 de placer un ressort
filaire rappelant en permanence l'axe du levier externe contre une bordure interne du trou d'axe dans lequel il est placé. Néanmoins un tel ressort génère des frottements dans la liaison pivot entre la tige d'actionneur actuateur et le levier de clapet de décharge, lesquels frottements constituent une dissipation d'énergie mécanique et une source d'usure mécanique due à l'effet de frottement.

Le but de l'invention est de proposer un dispositif dans lequel la liaison entre tige de commande d'actionneur et levier de clapet de décharge présente un niveau de bruit réduit tout en ne générant pas de frottement nuisible au fonctionnement et à la durabilité de cette liaison.

Ce but est atteint selon l'invention grâce à un ensemble de suralimentation comprenant un turbocompresseur de suralimentation en air, un clapet de décharge du turbocompresseur, le clapet de décharge comprenant un bras basculant et l'ensemble de suralimentation comprenant un actionneur comportant une tige d'actionnement reliée au bras basculant de telle sorte que la tige d'actionnement entraine le bras basculant, la tige d'actionnement et le bras basculant étant reliés entre eux par un couple constitué d'un trou d'axe et d'un axe introduit dans ce trou d'axe avec un jeu dimensionnel de l'axe dans le trou d'axe, l'ensemble de suralimentation comprenant en outre un élément élastique exerçant une force sur l'axe de telle sorte que l'axe est maintenu en butée contre une paroi intérieure du trou d'axe à l'encontre d'un déplacement au sein du jeu dimensionnel, caractérisé en ce qu'un orifice d'ancrage est présent dans l'axe et l'élément élastique est ancré dans l'orifice d'ancrage.

Avantageusement, l'axe présente un axe géométrique central et l'orifice d'ancrage est disposé sur l'axe géométrique central de l'axe.

Avantageusement, l'élément élastique présente une forme sensiblement en U dont une branche de la forme en U est ancrée dans ledit orifice d'ancrage de l'axe.

Avantageusement, l'élément élastique présente une seconde branche laquelle est introduite dans un second orifice d'ancrage réalisé dans la tige d'actionnement ou dans le levier de clapet de décharge.

Avantageusement, le second orifice d'ancrage est un orifice traversant et la seconde branche présente une portion oblique par rapport à un axe dudit second orifice d'ancrage de sorte que la portion oblique forme une rampe de coulissement pour un bord dudit second orifice d'ancrage.

Avantageusement, l'élément élastique présente une portion en arc de cercle disposée entre deux branches de la forme en U.

Avantageusement, l'élément élastique présente une extrémité formant une boucle laquelle boucle entoure la tige d'actionnement.

Avantageusement, la tige d'actionnement comporte un pas de vis, la tige d'actionnement comporte un écrou vissé sur le pas de vis et la boucle de l'élément élastique est disposée en appui contre l'écrou.

Avantageusement, la tige d'actionnement comporte un pas de vis, la tige d'actionnement comporte un écrou vissé sur le pas de vis, et l'écrou comporte un aménagement de réception de la boucle apte à maintenir la boucle à l'encontre de déplacements dans l'un et l'autre de deux sens opposés le long de la tige d'actionnement.

Avantageusement, l'aménagement de réception de la boucle est constitué par une gorge entourant l'écrou.

Avantageusement, l'élément élastique forme une boucle ayant deux branches lesquelles deux branches de la boucle se croisent.

Avantageusement, la boucle est placée dans un plan parallèle à la fois au bras basculant et à la tige d'actionnement.

L'invention a aussi pour objet un moteur à combustion comprenant un ensemble de suralimentation selon l'une quelconque des variantes précédemment décrites.

L'invention a encore pour objet un véhicule automobile comprenant un tel moteur à combustion.

D'autres caractéristiques, buts et avantages de l'invention apparaîtront à la lecture de la description qui va suivre, faite en référence aux figures annexées sur lesquelles :

- la figure 1 représente une liaison entre une tige d'actionneur et un levier de clapet de décharge selon un premier mode de réalisation de l'invention ;

- la figure 2 représente une liaison entre une tige d'actionneur et un levier de clapet de décharge selon un deuxième mode de réalisation de l'invention ;

- la figure 3 représente une liaison entre une tige d'actionneur et un levier de clapet de décharge selon un troisième mode de réalisation de l'invention ;

- la figure 4 représente une liaison entre une tige d'actionneur et un levier de clapet de décharge selon un quatrième mode de réalisation de l'invention ;

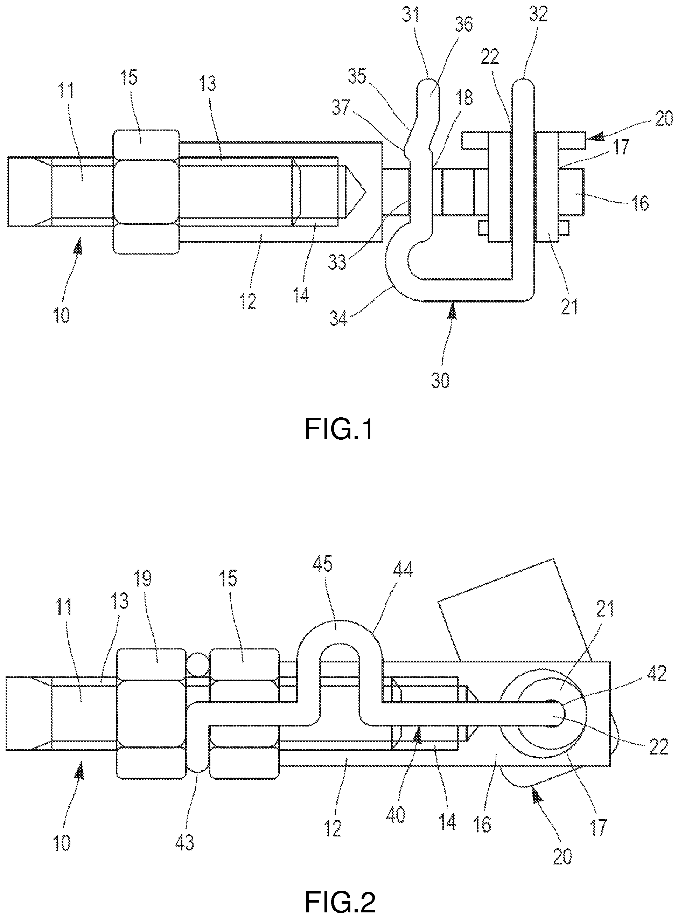

Tel que représenté sur la figure 1, l'assemblage selon le premier mode de réalisation comporte une tige d'actionneur de clapet de décharge 10 et un levier de clapet de décharge 20. La tige d'actionneur 10 est actionnée par un actionneur non représenté selon une direction de coulissement alignée sur la direction principale de la tige 10. Sous l'effet du coulissement de la tige 10, le levier 20 décrit un mouvement de balancement autour d'un axe fixe non représenté, situé au-dessus de la figure.

La tige 10 comporte un corps de tige 11 et une tête de tige 12 laquelle est vissée sur le corps de tige 11 de manière à permettre un réglage en avancement de la tête de tige 12 selon la direction principale de la tige 10. Pour cela le corps de tige 11 présente un filetage externe 13 et la tête de tige un filetage complémentaire 14. La tige 10 est également munie d'un contre-écrou 15 également vissé sur le filetage 13 du corps de tige 11 et venant bloquer en place la tête de tige 12.

La tête de tige 12 présente une extrémité 16 munie d'un orifice 17 traversant lequel orifice 17, aussi désigné trou d'axe 17, reçoit un doigt 21 émanant du levier de clapet 20. Le doigt 21, aussi désigné axe 21, est pour cela orienté parallèlement à l'axe de rotation du levier 20, de sorte que sous l'effet du coulissement de la tige 10, le doigt 21 se translate avec la tige 10 en entrainant le reste du levier de clapet 20 avec lui. Le levier de clapet 20 et le doigt 21 forme un bras basculant.

La tête de tige 12 présente ici un orifice traversant 18 disposé parallèlement au doigt 21 du levier 20, lequel orifice 18 reçoit une agrafe 30. L'agrafe 30 présente une forme en U, dont une première branche 31 traverse l'orifice 18 et dont une seconde branche 32 traverse un orifice 22 du doigt de levier 21. L'agrafe 30 est conformée de telle façon que dans cette position de montage elle tend à repousser ses deux branches 31 et 32 l'une de l'autre par élasticité et ainsi à repousser le doigt de levier 21 par rapport au corps de tige 11. Du fait de l'existence d'un jeu entre le doigt de levier 21 et l'orifice 17 dans lequel il est introduit, le doigt de levier 21 se trouve donc en appui permanent contre une zone de l'orifice 17 qui est la plus éloignée du corps 11 de la tige 10. Ainsi les chocs saccadés dus aux vibrations du levier de clapet 20 sont éliminés et la bruyance de l'assemblage décrit ici est particulièrement faible.

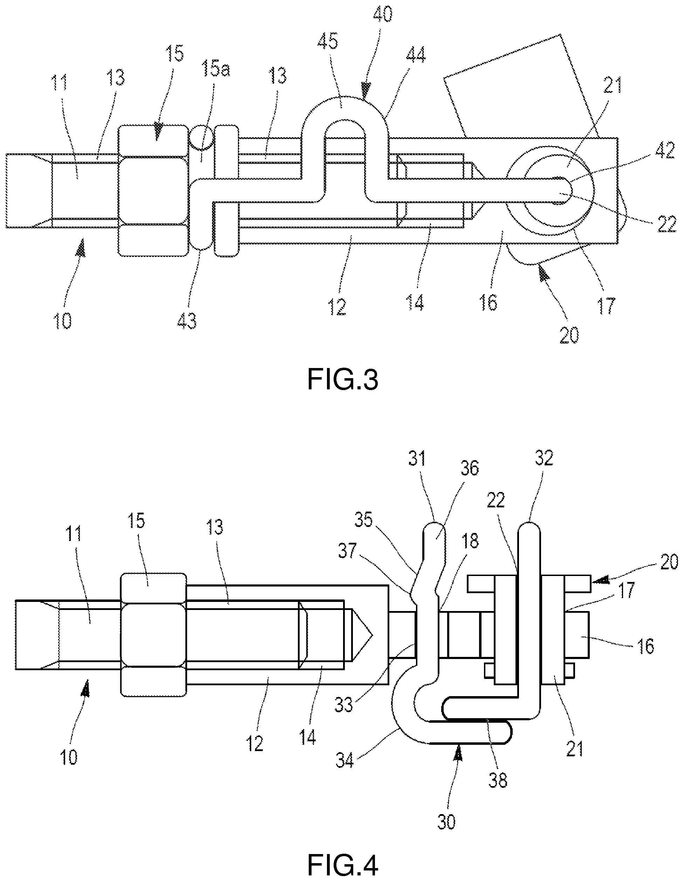

La branche 31 de l'agrafe 30 comporte un tronçon rectiligne 33 coopérant avec l'orifice 18 de la tête de tige 12. Entre la portion rectiligne 33 et une base du U formé par l'agrafe se trouve un tronçon 34 décrivant un trajet en arc de cercle qui, de par cette forme arrondie, présente une aptitude particulière au fléchissement et autorise ainsi un rapprochement élastique optimal entre les deux branches 31 et 32. En variante, ce tronçon 34 peut être remplacé par une partie de l'agrafe décrivant une boucle dont les deux branches se croisent. Une telle boucle est avantageusement placée, à la base du U, dans un plan parallèle à la fois au levier de clapet 20 et à la tige d'actionnement 10. La boucle peut par exemple faire un ou plusieurs tours circulaires à la façon d'un ressort de pince à linge. La boucle peut également être adoptée en plus du tronçon en arc de cercle 34, comme illustré en figure 4, la boucle étant désignée par la référence 38. La branche 31 présente, au niveau de son extrémité libre, une forme particulière permettant une insertion facile et fiable de la branche 31 dans l'orifice 18. Cette forme particulière est ici constituée par une portion oblique 35 disposée entre la portion rectiligne d'appui 33 et une portion rectiligne d'extrémité 36. Cette portion oblique 35 forme une rampe de coulissement de la branche 31 dans l'orifice 18 provoquant une déformation de la branche 31 lors de son insertion. Cette déformation lors de l'insertion amène l'opérateur à exercer une force substantielle sur l'agrafe 30 dans le sens de son insertion. La portion oblique 35 rejoint la portion rectiligne d'appui 33 par un décrochage 37, de sorte que l'opérateur ressent un franchissement mécanique à la fin de l'insertion de la branche 31 dans l'orifice 18 et que la branche 31 se trouve alors retenue dans l'orifice 18 dans cette position finale.

Un élément élastique 30 ainsi positionné permet de positionner le jeu toujours du même côté de la liaison entre tête de tige 12 et doigt de levier 21 et ainsi d'éviter les phénomènes de chocs métal-métal entre ces deux éléments.

La branche 32 est ici ancrée dans l'orifice 22 réalisé dans le doigt 21. De cette façon les frottements entre l'agrafe 30 et le doigt 21 se trouvent nettement diminués ainsi que l'usure associée. Cet effet s'explique par le fait que la surface de contact entre la branche 32 et le doigt 21 s'en trouve nettement diminuée.

De plus, l'orifice 22 se trouvant dans le présent exemple en position centrale du doigt 21, la surface de contact entre la branche 32 et le doigt 21 se trouve à l'endroit du doigt 21 qui est le moins sujet déplacement par rotation. Les déplacements relatifs entre la branche 32 et le doigt 21 dans leur surface de contact mutuelle se trouvent nettement réduits de par ce positionnement, réduisant simultanément l'usure provoquée par de tels frottements. De plus, l'effort généré par l'agrafe 30 étant appliqué au centre du doigt de levier 21, ceci permet de limiter l'effort de friction. De ce fait cet aménagement acoustique ne présente qu'une faible influence sur la courbe d'évolution de la course de levier de clapet de décharge en fonction du niveau de pression de commande dans l'actionneur.

Dans ce mode de réalisation, un fournisseur d'actionneur, par exemple un fournisseur de rang un du fournisseur de turbocompresseur, livre son composant actionneur avec la tête de tige 12 en place sur le corps de tige 11 et avec le contre-écrou 15 serré. L'agrafe 30 est livrée séparément. Le fournisseur de turbocompresseur qui est en charge de l'assemblage engage la tête de tige 12 sur le doigt de levier 21 et, une fois le doigt de levier 21 engagé au travers de la tête de tige 12, l'opérateur monte un circlips sur le doigt 21 pour maintenir celui-ci en place. Ensuite, l'opérateur engage l'agrafe 30 dans les deux orifices traversants 18 et 22, sans difficulté car l'écartement entre les deux branches 31 et 32 de l'agrafe 30 correspond sensiblement à l'écartement entre les deux orifices 18 et 22. Dans cette position de l'agrafe 30, l'écartement des deux branches 31 et 32 reste malgré tout supérieur à la distance entre les orifices 18 et 22 de manière à générer un effort de contact entre le doigt de levier 21 et la tête de tige 12.

On décrira maintenant l'assemblage de la figure 2, en reprenant les mêmes références numériques pour des éléments semblables ou similaires à ceux de la figure 1. L'assemblage représenté sur la figure 2 comporte une agrafe 40 de type ressort laquelle présente là aussi une branche rectiligne 42 pénétrant dans le doigt de levier 21 au travers d'un orifice central 22 du doigt de levier.

Dans sa partie coopérant avec la tige d'actionneur, l'agrafe 40 forme une boucle d'ancrage 43 entourant le corps de tige 11 laquelle boucle d'ancrage 43 s'étend dans un plan perpendiculaire à l'axe longitudinale de la tige 10 en forme un cercle de mêmes dimensions transversales que le corps de tige 11. Cette boucle 43 entoure le corps de tige 11 dans sa zone pourvue du filetage 13 et se trouve maintenue dans cette position par le contre-écrou 15 ainsi qu'un second contre-écrou 19. La boucle 43 se trouve donc prise en étau entre ces deux contre-écrous 15 et 19. Une telle agrafe 40 s'étend donc sur une distance longitudinale allant des contre-écrous 15 et 19 au doigt de levier 21 et présente à cet effet une partie importante alignée dans la direction principale de la tige 20. Afin de conférer une élasticité suffisante à l'agrafe 40 en rapprochement de la boucle 43 avec la branche 42, l'agrafe forme une partie centrale 44 en écartement latéral par rapport à l'axe de la tige 10, laquelle partie centrale 44 décrit deux branches perpendiculaires à la tige 10 lesquelles branches sont jointes entre elles par un demi-cercle 45. Cette forme arrondie confère à l'agrafe 40 une élasticité adéquate en raccourcissement longitudinal, c'est-à-dire en rapprochement de la branche 42 avec la boucle 43.

En variante, cette partie centrale 44 peut être remplacée par une partie de l'agrafe décrivant une boucle dont les deux branches se croisent. Une telle boucle est avantageusement placée dans un plan parallèle à la fois au levier de clapet 20 et à la tige d'actionnement 10. La boucle peut par exemple faire un ou plusieurs tours circulaires à la façon d'un ressort de pince à linge. La boucle peut également être adoptée en plus de la partie centrale 44.

Dans ce mode de réalisation, le fournisseur de l'actionneur livre son actionneur avec la tête de tige 12, le contre-écrou 15, le second contre-écrou 19, et l'agrafe 40. A cette étape, le contre-écrou 15 est serré et par conséquent, il bloque en position la tête de tige 12 alors que le second contre-écrou 19 est suffisamment écarté du contre-écrou 15 pour laisser à l'agrafe de la mobilité en translation et en rotation sur la tige.

Lorsque le fournisseur du turbocompresseur réalise l'assemblage de l'actionneur, il engage la tête de tige 12 sur le doigt de levier 21 ainsi que la branche 42 de l'agrafe dans l'orifice central 22 du doigt de levier 21. Le montage est aisé car à ce moment du processus de montage l'agrafe 40 n'est pas mise sous contrainte. Ensuite, le second contre-écrou 19 est serré de manière à mettre l'agrafe sous charge et ainsi générer un léger effort de contact entre le doigt de levier 21 et la tête de tige 12. Là encore, le léger effort de contact appliqué par l'élément élastique permet de maintenir la répartition du jeu et d'éviter le phénomène de chocs métal-métal.

Le mode de réalisation de la figure 3 diffère de celui de la figure 2 par le fait que le contre-écrou 15 est muni d'une gorge circonférentielle 15a dans laquelle est montée la boucle 43. Dans ce cas, le fournisseur de l'actionneur livre son actionneur avec la tête de tige 12, le contre-écrou 15 avec gorge intégrée 15a et l'agrafe de type ressort 40. A ce moment, le contre-écrou 15 est idéalement serré et par conséquent il bloque en position la tête de tige 12. La gorge 15a du contre-écrou 15 présente suffisamment de jeu avec l'agrafe 40 pour que la tête de tige 12 soit engagée sur le doigt de levier 21 en même temps que la branche transversale 42 de l'agrafe 40 est engagée dans l'orifice central 22 du doigt de levier 21. Une autre solution consiste à desserrer l'écrou 15 puis à resserrer ce dernier une fois la branche transversale 42 de l'agrafe 40 engagée dans l'orifice central 22 du doigt de levier 21.

## Revendications

1. Ensemble de suralimentation pour moteur à combustion comprenant un turbocompresseur de suralimentation en air, un clapet de décharge (20, 21) du turbocompresseur, le clapet de décharge (20, 21) comprenant un bras basculant (20, 21) et l'ensemble de suralimentation comprenant un actionneur comportant une tige d'actionnement (10, 11, 12) reliée au bras basculant (20, 21) de telle sorte que la tige d'actionnement (10, 11, 12) entraine le bras basculant (20, 21), la tige d'actionnement (10, 11, 12) et le bras basculant (20, 21) étant reliés entre eux par un couple constitué d'un trou d'axe (17) et d'un axe (21) introduit dans ce trou d'axe (17) avec un jeu dimensionnel de l'axe (21) dans le trou d'axe (17), l'ensemble de suralimentation comprenant en outre un élément élastique (30,40) exerçant une force sur l'axe (21) de telle sorte que l'axe (21) est maintenu en butée contre une paroi intérieure du trou d'axe (17) à l'encontre d'un déplacement au sein du jeu dimensionnel, **caractérisé en ce qu'**un orifice d'ancrage (22) est présent dans l'axe (21) et l'élément élastique (30, 40) est ancré dans l'orifice d'ancrage (22).

2. Ensemble de suralimentation selon la revendication 1, **caractérisé en ce que** l'axe (21) présente un axe géométrique central et l'orifice d'ancrage (22) est disposé sur l'axe géométrique central de l'axe (21).

3. Ensemble de suralimentation selon la revendication 1 ou la revendication 2, **caractérisé en ce que** l'élément élastique (30, 40) présente une forme sensiblement en U dont une branche (32) de la forme en U est ancrée dans ledit orifice d'ancrage (22) de l'axe (21).

4. Ensemble de suralimentation selon la revendication précédente, **caractérisé en ce que** l'élément élastique (30, 40) présente une seconde branche (31) laquelle est introduite dans un second orifice d'ancrage (18) réalisé dans la tige d'actionnement (10, 11, 12) ou dans le levier de clapet de décharge (20, 21).

5. Ensemble de suralimentation selon la revendication précédente, **caractérisé en ce que** le second orifice d'ancrage (18) est un orifice traversant et la seconde branche (31) présente une portion oblique (35) par rapport à un axe dudit second orifice d'ancrage (18) de sorte que la portion oblique (35) forme une rampe de coulissement pour un bord dudit second orifice d'ancrage (18).

6. Ensemble de suralimentation selon l'une quelconque des revendications 3 à 5, **caractérisé en ce que** l'élément élastique (30) présente une portion en arc de cercle (34) disposée entre deux branches (31, 32) de la forme en U.

7. Ensemble de suralimentation selon l'une quelconque des revendications précédentes, **caractérisé en ce que** l'élément élastique (30, 40) présente une extrémité formant une boucle (43) laquelle boucle (43) entoure la tige d'actionnement (10, 11, 12).

8. Ensemble de suralimentation selon la revendication précédente, **caractérisé en ce que** la tige d'actionnement (10, 11, 12) comporte un pas de vis (13), la tige d'actionnement (10, 11, 12) comporte un écrou (15) vissé sur le pas de vis (13) et la boucle (43) de l'élément élastique (40) est disposée en appui contre l'écrou (15).

9. Ensemble de suralimentation selon la revendication 7, **caractérisé en ce que** la tige d'actionnement (10,11,12) comporte un pas de vis (13), la tige d'actionnement (10,11,12) comporte un écrou (15) vissé sur le pas de vis (13), et l'écrou (15) comporte un aménagement de réception (15a) de la boucle (43) apte à maintenir la boucle (43) à l'encontre de déplacements dans l'un et l'autre de deux sens opposés le long de la tige d'actionnement (10,11,12).

10. Ensemble de suralimentation selon la revendication précédente, **caractérisé en ce que** l'aménagement de réception (15a) de la boucle (43) est constitué par une gorge (15a) entourant l'écrou (15).

11. Ensemble de suralimentation selon l'une quelconque des revendications précédentes, **caractérisé en ce que** l'élément élastique (30, 40) forme une boucle (38) ayant deux branches lesquelles deux branches de la boucle (38) se croisent.

12. Ensemble de suralimentation selon la revendication précédente, **caractérisé en ce que** la boucle (38) est placée dans un plan parallèle à la fois au bras basculant (20) et à la tige d'actionnement (10).

13. Moteur à combustion, **caractérisé en ce qu'**il comprend un ensemble de suralimentation selon l'une quelconque des revendications précédentes.

14. Véhicule automobile, **caractérisé en ce qu'**il comprend un moteur à combustion selon la revendication précédente.

## Patentansprüche

1. Aufladungsbaugruppe für Verbrennungsmotor, umfassend einen Turbokompressor zur Aufladung mit Luft, eine Ablassklappe (20, 21) des Turbokompressors, wobei die Ablassklappe (20, 21) einen Schwenkarm (20, 21) umfasst und die Aufladungsbaugruppe eine Betätigungsvorrichtung umfasst, die eine Betätigungsstange (10, 11, 12) enthält, die mit dem Schwenkarm (20, 21) derart verbunden ist, dass die Betätigungsstange (10, 11, 12) den Schwenkarm (20, 21) antreibt, wobei die Betätigungsstange (10, 11, 12) und der Schwenkarm (20, 21) durch ein Paar miteinander verbunden sind, das aus einem Achsloch (17) und einer Achse (21) besteht, die in dieses Achsloch (17) eingeführt ist mit einem dimensionalen Spiel der Achse (21) in dem Achsloch (17), wobei die Aufladungsbaugruppe weiter ein elastisches Element (30, 40) umfasst, das eine Kraft auf die Achse (21) ausübt, derart, dass die Achse (21) entgegen einer Verlagerung innerhalb des dimensionalen Spiels gegen eine Innenwand des Achslochs (17) in Anschlag gehalten wird, **dadurch gekennzeichnet, dass** eine Verankerungsöffnung (22) in der Achse (21) vorhanden ist und das elastische Element (30, 40) in der Verankerungsöffnung (22) verankert ist.

2. Aufladungsbaugruppe nach Anspruch 1, **dadurch gekennzeichnet, dass** die Achse (21) eine geometrische Mittelachse aufweist und die Verankerungsöffnung (22) auf der geometrischen Mittelachse der Achse (21) angeordnet ist.

3. Aufladungsbaugruppe nach Anspruch 1 oder Anspruch 2, **dadurch gekennzeichnet, dass** das elastische Element (30, 40) eine im Wesentlichen U-förmige Form aufweist, wobei ein Schenkel (32) der U-förmigen Form in der Verankerungsöffnung (22) der Achse (21) verankert ist.

4. Aufladungsbaugruppe nach dem vorhergehenden Anspruch, **dadurch gekennzeichnet, dass** das elastische Element (30, 40) einen zweiten Schenkel (31) aufweist, der in eine zweite Verankerungsöffnung (18) eingeführt ist, die in der Betätigungsstange (10, 11, 12) oder in dem Hebel der Ablassklappe (20, 21) ausgeführt ist.

5. Aufladungsbaugruppe nach dem vorhergehenden Anspruch, **dadurch gekennzeichnet, dass** die zweite Verankerungsöffnung (18) eine durchgehende Öffnung ist und der zweite Schenkel (31) einen in Bezug auf eine Achse der zweiten Verankerungsöffnung (18) schrägen Abschnitt (35) aufweist, sodass der schräge Abschnitt (35) eine Gleitrampe für einen Rand der zweiten Verankerungsöffnung (18) bildet.

6. Aufladungsbaugruppe nach einem der Ansprüche 3 bis 5, **dadurch gekennzeichnet, dass** das elastische Element (30) einen kreisbogenförmigen Abschnitt (34) aufweist, der zwischen zwei Schenkeln (31, 32) der U-förmigen Form angeordnet ist.

7. Aufladungsbaugruppe nach einem der vorhergehenden Ansprüche, **dadurch gekennzeichnet, dass** das elastische Element (30, 40) ein Ende aufweist, das eine Schleife (43) bildet, wobei die Schleife (43) die Betätigungsstange (10, 11, 12) umgibt.

8. Aufladungsbaugruppe nach dem vorhergehenden Anspruch, **dadurch gekennzeichnet, dass** die Betätigungsstange (10, 11, 12) ein Gewinde (13) enthält, die Betätigungsstange (10, 11, 12) eine Mutter (15) enthält, die auf das Gewinde (13) geschraubt ist, und die Schleife (43) des elastischen Elements (40) in Anlage gegen die Mutter (15) angeordnet ist.

9. Aufladungsbaugruppe nach Anspruch 7, **dadurch gekennzeichnet, dass** die Betätigungsstange (10, 11, 12) ein Gewinde (13) enthält, die Betätigungsstange (10, 11, 12) eine Mutter (15) enthält, die auf das Gewinde (13) geschraubt ist, und die Mutter (15) eine Aufnahmeeinrichtung (15a) der Schleife (43) enthält, die in der Lage ist, die Schleife (43) entgegen von Verlagerungen in die eine und die andere von zwei entgegengesetzten Richtungen entlang der Betätigungsstange (10, 11, 12) zu halten.

10. Aufladungsbaugruppe nach dem vorhergehenden Anspruch, **dadurch gekennzeichnet, dass** die Aufnahmeeinrichtung (15a) der Schleife (43) aus einer Kehle (15a) besteht, die die Mutter (15) umgibt.

11. Aufladungsbaugruppe nach einem der vorhergehenden Ansprüche, **dadurch gekennzeichnet, dass** das elastische Element (30, 40) eine Schleife (38) mit zwei Schenkeln bildet, wobei sich die zwei Schenkel der Schleife (38) kreuzen.

12. Aufladungsbaugruppe nach dem vorhergehenden Anspruch, **dadurch gekennzeichnet, dass** die Schleife (38) in einer Ebene platziert ist, die gleichzeitig zu dem Schwenkarm (20) und zu der Betätigungsstange (10) parallel ist.

13. Verbrennungsmotor, **dadurch gekennzeichnet, dass** er eine Aufladungsbaugruppe nach einem der vorhergehenden Ansprüche umfasst.

14. Kraftfahrzeug, **dadurch gekennzeichnet, dass** es einen Verbrennungsmotor nach dem vorhergehenden Anspruch umfasst.

## Claims

1. Booster assembly for a combustion engine, comprising an air-booster turbocompressor and a discharge valve (20, 21) of the turbocompressor, the discharge valve (20, 21) comprising a tilting arm (20, 21) and the booster assembly comprising an actuator having an actuation rod (10, 11, 12) connected to the tilting arm (20, 21) so that the actuation rod (10, 11, 12) drives the tilting arm (20, 21), the actuation rod (10, 11, 12) and the tilting arm (20, 21) being connected together by a pair consisting of a spindle hole (17) and a spindle (21) introduced into this spindle hole (17) with a dimensional clearance of the spindle (21) in the spindle hole (17), the booster assembly further comprising an elastic element (30, 40) exerting a force on the spindle (21) so that the spindle (21) is held in abutment against an internal wall of the spindle hole (17) counter to a movement within the dimensional clearance, **characterised in that** an anchoring orifice (22) is present in the spindle (21) and the elastic element (30, 40) is anchored in the anchoring orifice (22).

2. Booster assembly according to claim 1, **characterised in that** the spindle (21) has a central geometric axis and the anchoring orifice (22) is disposed on the central geometric axis of the spindle (21).

3. Booster assembly according to claim 1 or claim 2, **characterised in that** the elastic element (30, 40) has a substantially U shape, wherein an arm (32) of the U shape is anchored in said anchoring orifice (22) of the spindle (21).

4. Booster assembly according to the preceding claim, **characterised in that** the elastic element (30, 40) has a second arm (31) that is introduced into a second anchoring orifice (18) produced in the actuation rod (10, 11, 12) or in the lever of the discharge valve (20, 21).

5. Booster assembly according to the preceding claim, **characterised in that** second anchoring orifice (18) is a through orifice and the second arm (31) has an oblique portion (35) with respect to an axis of said second anchoring orifice (18) so that the oblique portion (35) forms a sliding ramp for an edge of said second anchoring orifice (18).

6. Booster assembly according to any of claims 3 to 5, **characterised in that** the elastic element (30) has a portion in an arc of a circle (34) disposed between two arms (31, 32) of the U shape.

7. Booster assembly according to any of the preceding claims, **characterised in that** the elastic element (30, 40) has an end forming a loop (43), said loop (43) surrounding the actuation rod (10, 11, 12).

8. Booster assembly according to the preceding claim, **characterised in that** the actuation rod (10, 11, 12) has a screw thread (13), the actuation rod (10, 11, 12) has a nut (15) screwed onto the screw thread (13) and the loop (43) of the elastic element (40) is disposed in abutment against the nut (15).

9. Booster assembly according to claim 7, **characterised in that** the actuation rod (10, 11, 12) has a screw thread (13), the actuation rod (10, 11, 12) has a nut (15) screwed onto the screw thread (13), and the nut (15) has an arrangement (15a) receiving the loop (43) able to hold the loop (43) counter to movements in both of two opposite directions along the actuation rod (10, 11, 12).

10. Booster assembly according the preceding claim, **characterised in that** the arrangement (15a) receiving the loop (43) consists of a groove (15a) surrounding the nut (15).

11. Booster assembly according to any of the preceding claims, **characterised in that** the elastic element (30, 40) forms a loop (38) having two arms, said two arms of the loop (38) crossing each other.

12. Booster assembly according to the preceding claim, **characterised in that** the loop (38) is placed in a plane parallel both to the tilting arm (20) and to the actuation rod (10).

13. Combustion engine, **characterised in that** it comprises a booster assembly according to any of the preceding claims.

14. Motor vehicle, **characterised in that** it comprises a combustion engine according to the preceding claim.
